# EUROPÄISCHE PATENTSCHRIFT

(11) **EP 2 180 975 B1**
(45) Veröffentlichungstag und Bekanntmachung des Hinweises auf die Patenterteilung: **23.02.2011**
(21) Anmeldenummer: 08784828.9
(22) Anmeldetag: 17.07.2008
(51) Int. Cl.: B23Q 5/40, B23Q 11/12, F16H 25/20, F16H 57/04

(54) **SPINDELMOTOR**
SPINDLE MOTOR
MOTEUR DE BROCHE

(30) Priorität: 16.08.2007 DE 102007038854
(43) Veröffentlichungstag der Anmeldung: 05.05.2010
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2008/005845
(87) Internationale Veröffentlichungsnummer: WO 2009/021592

(56) Entgegenhaltungen:
- WO-A-02/093716
- DE-A1- 4 202 510
- DE-A1- 10 235 078
- GB-A- 699 778
- US-A- 4 232 562

## Beschreibung

Die Erfindung betrifft einen Spindelmotor.

Aus der DE 102 35 078 A1 ist ein Spindelmotor bekannt, der nur ein begrenztes Fettvolumen aufweist und somit eine geringe Standzeit.

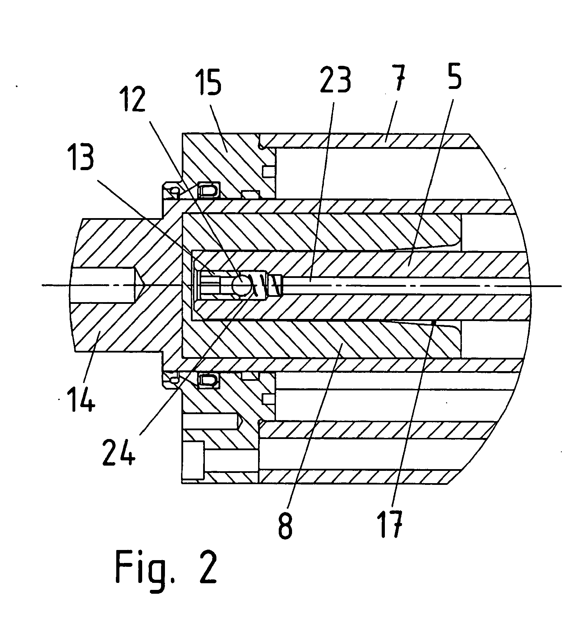

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus dem Katalog der Firma Dichtomatik sind Hochdruckdichtungen aus dem Fachgebiet der Hydraulik bekannt, wie beispielsweise eine PTFE=-Nutringdichtung mit einer V-Feder aus Stahl, dort mit MA47 bezeichnet. Außerdem ist eine weitere Hochdruckdichtung bekannt, wie das Produkt WCP21, welche eine Radial-Wellendichtung mit einer PTFE-Dichtlippe und einer Elastomervorspannscheibe darstellt, die zwischen zwei Metallkäfigen geklemmt sind.

Aus der WO 021093716 A1 ist ein Linearaktor bekannt, bei dem aus einem Ölreservoir in einer Kammer durch den Hub des Schlittens Öl gefördert wird, Insbesondere zur Spindelmutter, und damit der Raum in dem sich die Spindelmutter bewegt, mit Öl beaufschlagt wird.

Aus der DE 102 35 078 A1 ist ein Spindelmotor bekannt, bel dem die Spindel einen Fettspeicher zur Schmierung des Gewindes umfasst. Dabei wird nur durch Anfahren einer speziellen Position, die außerhalb des Arbeitsbereiches liegt, eine jeweilige Schmiermittelmenge aus dem Fettspeicher herausgedrückt.

Aus der GB 699 778 Ist ein Schmlerkonzept bei einer Gewindespindel bekannt.

Auch aus der US 4 232 562 ist ein Linearaktor mit Gewindespindel bekannt.

Aus der DE 42 02 610 A1 ist eine Gewindespindel bekannt.

Der Erfindung liegt daher die Aufgabe zugrunde, bei einem Spindelmotor die Standzeit zu verlängern.

Erfindungsgemäß wird die Aufgabe bei dem Spindelmotor nach den in Anspruch 1 angegebenen Merkmalen gelöst.

Wichtige Merkmale der Erfindung bei dem Spindelmotor sind, dass er einen Elektromotor mit einem Rotor umfasst, der mit einer Gewindespindel verbunden ist, deren Gewinde mit einem Gewinde einer mit einer Kolbenstange verbundenen Spindelmutter im Eingriff steht,
wobei die Spindelmutter mit Kolbenstange axial geführt ist in einem Gehäuseteil
wobei zur axialen Führung ein Führungsteil mit der Spindelmutter und der Kolbenstange verbunden ist,
wobei eine Ölbad-Schmierung vorgesehen ist.

Von Vorteil ist dabei, dass ein ständiger Betrieb ohne Unterbrechung für Fettschmierungen und dergleichen ermöglicht ist. Außerdem ist eine besonders kompakte Bauart ermöglicht und geringe Reibungsverluste sind vorsehbar. Insbesondere ist eine Lebensdauerschmierung ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Bei der erfindungsemäßen Ausgestaltung ist im Inneren des Spindelmotors, insbesondere im Spindelbereich abtriebsseitig vom Elektromotor, das Ölbad vorgesehen. Es ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise ungestört bleibt.

Bei der erfindunsgemäßen Ausgestaltung ist die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einer vorteilhaften Ausgestaltung ist die Kupplung eine axial steckbare Kupplung. Von Vorteil ist dabei, dass das Lösen und Wiederverbinden des Motors einfach und ohne Aufwand ermöglicht ist. Außerdem treten beim Wechseln des Elektromotors keine Ölverluste und Ölverschmutzungen auf.

Bei einer vorteilhaften Ausgestaltung ist die Dichtung als Wellendichtring ausgeführt, der in einem Gehäuseteil seinen Sitz hat, welches auch einen Sitz zur Aufnahme des Lagers der Gewindespindel aufweist,

wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einer vorteilhaften Ausgestaltung weist die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere ist die Schulter am Innenring des für die Gewindespindel vorgesehenen Lagers abgestützt. Von Vorteil ist dabei, dass die Trennung des Motors über die steckbare Kupplung ermöglicht ist.

Bei einer vorteilhaften Ausgestaltung ist die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trocken betriebenen Dichtungen verwendbar sind.

Bei einer vorteilhaften Ausgestaltung umfasst die Dichtungsanordnung zumindest einen Abstreifer, einen O-Ring und/oder eine Nutdichtung. Von Vorteil ist dabei, dass schmierstoffbetriebene, insbesondere ölbetriebene Dichtelemente einsetzbar sind, die auch bei einem Überdruck von 2 bar oder mehr Dichtheit gewährleisten.

Bei einer vorteilhaften Ausgestaltung ist in der Kolbenstange eine Abstützung verbunden, insbesondere eingepresst. Von Vorteil ist dabei, dass die Gewindespindel abstützbar ist und somit mit sehr großer axialer Länge ausführbar ist.

Bei einer vorteilhaften Ausgestaltung ist die Abstützung als im Wesentlichen zylindrische Ausnehmung ausgeführt, wobei an ihrem offenen Endbereich eine Einführschräge für die Einfädelung der Gewindespindel vorgesehen ist. Von Vorteil ist dabei, dass geringe Reibung auftritt, insbesondere bei Verwendung von PTFE-Material, insbesondere also Teflon, für die Abstützung. Dabei ist die Gewindespindel aus Metall, insbesondere Stahl.

Bei einer vorteilhaften Ausgestaltung umfasst die Gewindespindel zumindest einen Schmierstoffkanal, insbesondere einen aus mindestens einer Schmierstoffbohrung zusammengesetzten. Von Vorteil ist dabei, dass Öl durchleitbar ist durch die Gewindespindel hindurch und an einem Ort ausleitbar ist, an welchem zu schmierende Elemente angeordnet sind.

Bei einer vorteilhaften Ausgestaltung umfasst die Gewindespindel an ihrem vom Motor abgewandten Ende ein Ventil, das mit dem Schmierstoffkanal verbunden ist. Von Vorteil ist dabei, dass mittels des Ventils schwankende Drucke ausnutzbar sind und in eine Pumpwirkung verwandelbar ist. Denn bei Überdruck über einem kritischen Wert an Druck öffnet das Ventil, bei unteren Druckwerten bleibt es geschlossen.

Bei einer vorteilhaften Ausgestaltung ist das Ventil zwischen einer Einlassöffnung und dem Schmierstoffkanal ist, insbesondere innerhalb der Gewindespindel. Von Vorteil ist dabei, dass mittels der erwähnten Pumpwirkung Öl durch den Schmierstoffkanal beförderbar ist und somit eine Schmierung von zu schmierenden Elementen ausführbar ist.

Bei einer vorteilhaften Ausgestaltung umfasst das Ventil zumindest eine von einer Feder gegen eine Öffnung gedrückte Kugel. Von Vorteil ist dabei, dass das Ventil mit einfachen und kostengünstigen Mitteln herstellbar ist.

Bei einer vorteilhaften Ausgestaltung mündet der Schmierstoffkanal zumindest mit seinem zweiten Ende derart im Bereich der Dichtung, dass Schmierstoff der Dichtung zugeführt wird. Von Vorteil ist dabei, dass Die Dichtung als Wellendichtring ausführbar ist und der mittels des Schmierstoffkanals herangeführte Schmierstoff die Dichtheit gewährleistet.

Bei einer vorteilhaften Ausgestaltung mündet der Schmierstoffkanal zumindest mit seinem zweiten Ende zwischen der Dichtung und dem Lager. Von Vorteil ist dabei, dass Schmierstoff der Dichtung und dem Lager zugeführt wird.

Bei einer vorteilhaften Ausgestaltung ist die Gewindespindel mit dem Rotor gelagert in einem Gehäuseteil des Elektromotors. Von Vorteil ist dabei, dass Lager einsparbar sind

Bei einer vorteilhaften Ausgestaltung ist zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einer vorteilhaften Ausgestaltung ist das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einer vorteilhaften Ausgestaltung ist der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist.

Bei einer vorteilhaften Ausgestaltung ist die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einer vorteilhaften Ausgestaltung ist Im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden.

Bei einer vorteilhaften Ausgestaltung ist das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichern der Kolbenstange gegen das Führungsteil. Von Vorteil ist dabei, dass einfache und kostengünstig Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist der Rotor in einem axialen Endbereich einen oder mehrere Axialschlitze auf. Von Vorteil ist dabei, dass nur geringe Andruckkräfte zum Verspannen notwendig sind.

Bei einer vorteilhaften Ausgestaltung wird eine formschlüssige Verbindung zwischen Führungsteil und Kolbenstange mittels Spannmitteln vorgesehen. Als Spannmittel sind Spannstifte, also Spannhülsen, verwendbar, die in zylindrische Bohrungen eingesteckt sind. Für diese formschlüssige Verbindung ist an der Kolbenstange eine derartige Abflachung vorgesehen, dass die Spannstifte berührend umgeben sind und sich an diese Abflachungsoberfläche anschmiegen infolge ihrer durch elastische Verformung bedingten Anpresskraft. Dazu ist die Abflachung als Teil einer Oberfläche eines gedachten Zylinders ausgeführt. Von Vorteil ist dabei, dass nur geringe Andruckkräfte zum Verspannen notwendig sind.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elements vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

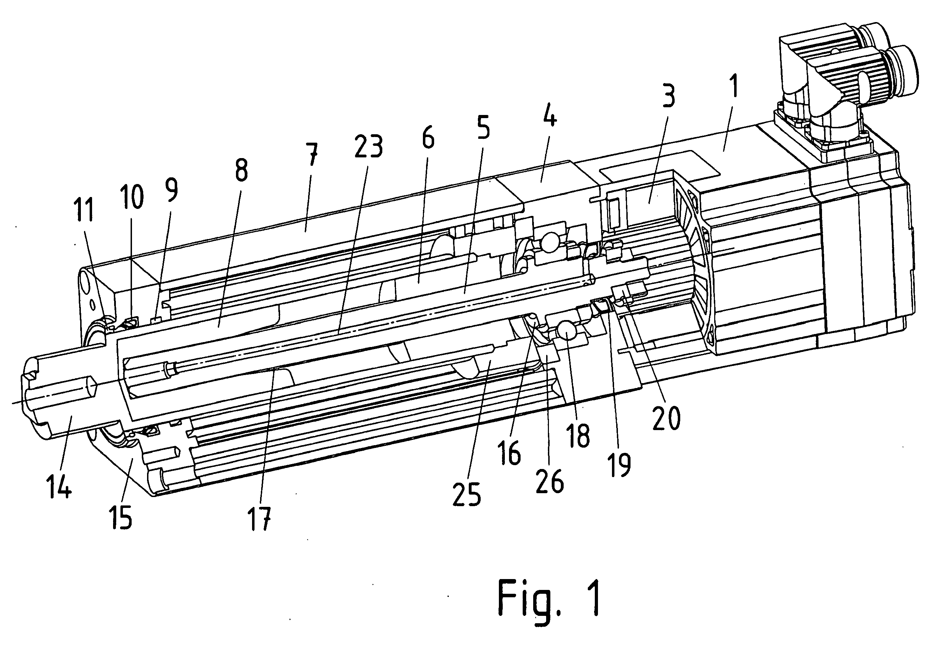

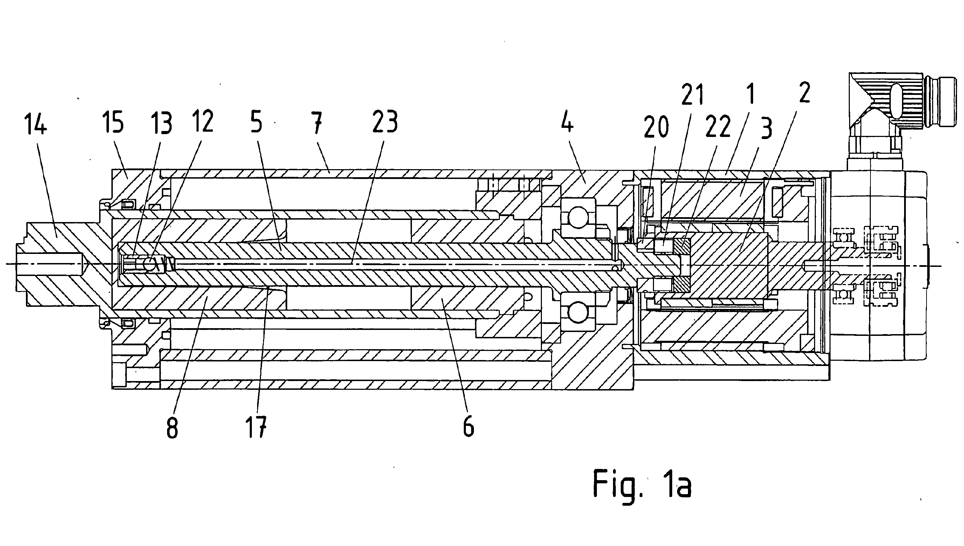

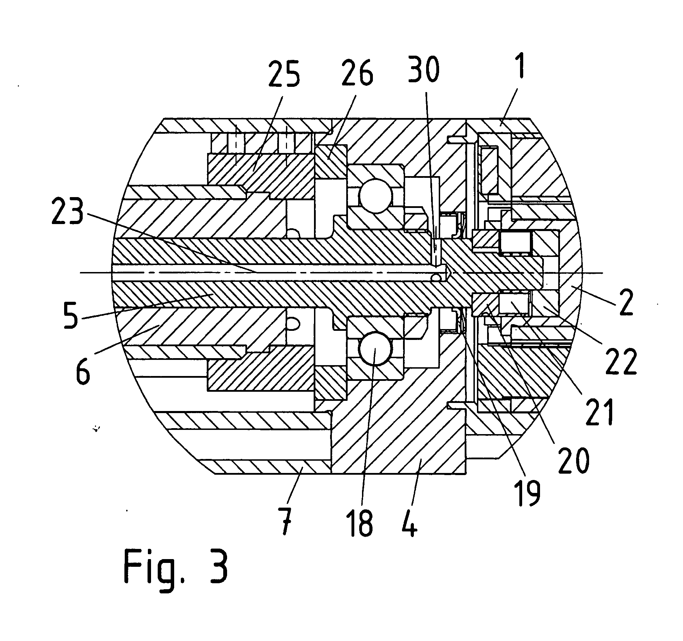

In der Figur 1 ist ein erfindungsgemäßer Spindelmotor in angeschnittener Schrägansicht und in Figur 1a in Schnittansicht gezeichnet. In Figur 2 und 3 sind jeweilige Ausschnitte hiervon vergrößert dargestellt.

Das Motorgehäuse 1 des Elektromotors, umfassend Rotorwelle 2 und Stator 3, ist mit den Gehäuseteilen 4, 7 und 15 des Spindelmotors dicht verbunden. Vorzugswiese ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist über eine axial steckbare Kupplung mit der Rotorwelle 2 verbunden. Die Kupplung weist ein Klauenteil 20 und ein Klauenteil 22 auf, zwischen denen ein Kunststoffstem 21 angeordnet ist. Vorzugsweise ist diese Wellenkupplung spielfrei.

Eine im Gehäuseteil 4 angeordneter Dichtung 19 dichtet den Spindelinnenraum gegen den Motor hin ab.

Somit ist der Innenraum mit Öl befüllbar. Abtriebsseitig ist die Kolbenstange 14 mittels Führungsring 9, Dichtring 10 und Abstreifer 11 abgedichtet gegen die Umgebung.

Die Dichtungen sind dabei derart gewählt, dass sie gegen Überdrucke von mehr als 2 bar Dichtheit gewährleisten.

Die Gewindespindel weist eine Schulter 16 auf, die Axialkräfte ableitet an das Lager 18.

Bei Drehen der Gewindespindel 5 wird die Spindelmutter 6 axial bewegt, weil sie über, Führungsteile, wie Führungsteil 25 und 26 Gewindering 26, die mit Linearführvorrichtungen verbunden sind, linear geführt ist.

Zur Abstützung bei besonders langer Ausführung der Gewindespindel 5 ist eine Abstützung 8 aus Teflon vorgesehen, die eine zylindrische Bohrung aufweist zur Aufnahme der Gewindespindel 5 und an ihrem offenen Ende eine Aufweitung aufweist, die in den Figuren 1 und 2 als Einführschräge 17 erkennbar ist.

Die Abstützung 8 ist pressverbunden in der Kolbenstange 14 und verliert den Kontakt zur Gewindespindel 5, wenn die Kolbenstange weit heraus gefahren wird. In diesem Fall ist jedoch auch die Spindelmutter weit verfahren und übernimmt die abstützende Funktion.

Beim Zurückfahren wird dann die Gewindespindel in die Einführschräge sozusagen eingefädelt.

Um die Gewindespindel 5 herum ist Schmierstoff vorgesehen, insbesondere Öl.

Dieses fließt insbesondere bei einer Einbaulage, in welcher die Kolbenstange 14 nach unten zeigt, zum entsprechenden axialen Endbereich. Wird nun der Spindelmotor hin und her gefahren, wird ein Ventil durch auftretenden lokalen Überdruck aktiviert. Hierzu wird die Kugel 12 von der Hülse 13 abgehoben und das Öl fließt durch die Hülse 13 an der Kugel 12 2 vorbei in die Schmierstoffbohrung 23 und wird bis zur Radialbohrung 30 befördert, wo es dann austritt im Bereich des Lagers 18 und der Dichtung 19.

Somit ist eine Schmierung in jeder Einbaulage gewährleistet.

Die geschilderte Ölpumpe ist wirksam, wenn die Kolbenstange nach unten also in Gravitationsrtchtung weist. Wenn sie jedoch nach oben weist, fließt das Öl selbsttätig zum Lager 18 und der Dichtung 19.

Auch in dieser Montagerichtung des Spindelmators ist wegen der zum Spindelinnraum hin offenen Ausführung des Gewindetriebs eine Schmierung des Gewindetriebs, des Führungsteils und der Nutensteine ausgeführt.

Die Kugel 12 wird bei Abbau das lokalen Überdrucks durch ein Federelement 24 in ihre Ausgangslage versetzt.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Als Dichtung ist vorzugsweise eine Hochdruckdichtung verwendet, wie beispielsweise eine WCP21 oder MA47.

### Bezugszeichenliste

- 1: Motorgehäuse
- 2: Rotorwelle
- 3: Stator
- 4: Gehäuseteil
- 5: Gewindespindel
- 6: Spindelmutter
- 7: Gehäuseteil
- 8: Abstützung
- 9: Führungsring
- 10: Dichtring
- 11: Abstreifer
- 12: Kugel
- 13: Hülse
- 14: Kolbenstange
- 15: Gehäuseteil
- 16: Schulter zur Axialkraftaufnahme
- 17: Einführschräge
- 18: Lager
- 19: Dichtung, Wellendichtring
- 20: Klauenteil
- 21: Kunststoffstern
- 22: Klauenteil
- 23: Schmierstoffbohrung
- 24: Federelement
- 25: Führungsteil
- 26: Gewindering
- 30: Radialbohrung

## Patentansprüche

1. Spindelmotor,
umfassend einen Elektromotor mit einem Rotor, der mit einer Gewindespindel verbunden ist, deren Gewinde mit einem Gewinde einer mit einer Kolbenstange (14) verbundenen Spindelmutter(6) im Eingriff steht,
wobei die Spindelmutter(6) mit Kolbenstange (14) axial geführt ist in einem Gehäuseteil
wobei zur axialen Führung ein Führungsteil mit der Spindelmutter(6) und der Kolbenstange (14)
verbunden ist,
wobei eine ölbad-Schmierung vorgesehen ist,
**dadurch gekennzeichnet, dass**
eine Dichtung zwischen dem Raumbereich des Elektromotors und dem Raumbereich, in welchem die Spindelmutter(6) angeordnet ist, vorgesehen ist,
wobei die Dichtung axial zwischen einem Lager der Gewindespindel und einer die Rotorwelle (2) und die Gewindespindel verbindenden Kupplung angeordnet ist,
insbesondere wobei die Kupplung eine axial steckbare Kupplung ist.

2. Spindelmotor nach mindestens einem der vorangegangenen Ansprüche,
**dadurch gekennzeichnet, dass**
im Inneren des Spindelmotors, insbesondere im Spindelbereich abtriebsseitig vom Elektromotor das Ölbad vorgesehen ist.

3. Spindelmotor nach mindestens einem der vorangegangenen Ansprüche,
**dadurch gekennzeichnet, dass**
zumindest eine Hochdruckdichtung zum Abdichten verwendet ist, insbesondere zwischen Spindelbereich und Elektromotor und/oder zwischen Spindelbereich und Umgebung.

4. Spindelmotor nach mindestens einem der vorangegangenen Ansprüche,
**dadurch gekennzeichnet, dass**
die Dichtung als Wellendichtring ausgeführt ist, der in einem Gehäuseteil seinen Sitz hat, welches auch einen Sitz zur Aufnahme des Lagers der Gewindespindel aufweist,
wobei die Lauffläche des Wellendichtrings an der Gewindespindel vorgesehen ist.

5. Spindelmotor nach mindestens einem der vorangegangenen Ansprüche,
**dadurch gekennzeichnet, dass**
die Gewindespindel eine Schulter zur Aufnahme von Axialkräften aufweist.

6. Spindelmotor nach mindestens einem der vorangegangenen Ansprüche,
**dadurch gekennzeichnet, dass**
die Schulter am Innenring des für die Gewindespindel vorgesehenen Lagers abgestützt ist.

7. Spindelmotor nach mindestens einem der vorangegangenen Ansprüche,
**dadurch gekennzeichnet, dass**
die Kolbenstange (14) abtriebsseitig von einer schmierstoffbetriebenen Dichtungsanordnung abgedichtet ist zum abtriebsseitigen Gehäuseteil hin.

8. Spindelmotor nach mindestens einem der vorangegangenen Ansprüche,
**dadurch gekennzeichnet, dass**
die Dichtungsanordnung zumindest einen Abstreifer, einen O-Ring und/oder eine Nutdichtung umfasst.

9. Spindelmotor nach mindestens einem der vorangegangenen Ansprüche,
**dadurch gekennzeichnet, dass**
in der Kolbenstange (14) eine Abstützung (8) verbunden, insbesondere eingepresst, ist.

10. Spindelmotor nach mindestens einem der vorangegangenen Ansprüche,
**dadurch gekennzeichnet, dass**
die Abstützung (8) als im Wesentlichen zylindrische Ausnehmung ausgeführt ist, wobei an Ihrem offenen Endbereich eine Einführschräge (17) für die Einfädelung der Gewindespindel vorgesehen ist.

11. Spindelmotor nach mindestens einem der vorangegangenen Ansprüche,
**dadurch gekennzeichnet, dass**
die Gewindespindel zumindest einen Schmierstoffkanal umfasst, insbesondere einen aus mindestens einer Schmierstoffbohrung (23) zusammengesetzten.

12. Spindelmotor nach mindestens einem der vorangegangenen Ansprüche,
**dadurch gekennzeichnet, dass**
die Gewindespindel an ihrem vom Motor abgewandten Ende ein Ventil umfasst, das mit dem Schmierstoff kanal verbunden ist.

13. Spindelmotor nach mindestens einem der vorangegangenen Ansprüche,
**dadurch gekennzeichnet, dass**
das Ventil zwischen einer Einlassöffnung und dem Schmierstoffkanal vorgesehen ist, insbesondere innerhalb der Gewindespindel.

14. Spindelmotor nach mindestens einem der vorangegangenen Ansprüche,
**dadurch gekennzeichnet, dass**
das Ventil zumindest eine von einer Feder gegen eine Öffnung gedrückte Kugel (12) umfaßt.

15. Spindelmotor nach mindestens einem der vorangegangenen Ansprüche,
**dadurch gekennzeichnet, dass**
der Schmierstoffkanal zumindest mit seinem zweiten Ende derart im Bereich der Dichtung mündet, dass Schmierstoff der Dichtung, zugeführt wird.

16. Spindelmotor nach mindestens einem der vorangegangenen Ansprüche,
**dadurch gekennzeichnet, dass**
der Schmierstoffkanal zumindest mit seinem zweiten Ende zwischen der Dichtung und dem Lager mündet, insbesondere damit Schmierstoff der Dichtung und dem Lagerzugeführt wird.

17. Spindelmotor nach mindestens einem der vorangegangenen Ansprüche,
**dadurch gekennzeichnet, dass**
das Führungsteil im Gehäuseteil axial geführt ist über Nutensteine, insbesondere Nutensteine welche in einer Nut des Gehäuseteils axial bewegbar angeordnet sind.

18. Spindelmotor nach mindestens einem der vorangegangenen Ansprüche,
**dadurch gekennzeichnet, dass**
die Gewindespindel mit dem Rotor auch gelagert Ist In einem Gehäuseteil des Elektromotors.

19. Spindelmotor nach mindestens einem der vorangegangenen Ansprüche,
**dadurch gekennzeichnet, dass**
der Rotor mit der Gewindespindel spielfrei verbunden ist.

20. Spindelmotor nach mindestens einem der vorangegangenen Ansprüche,
**dadurch gekennzeichnet, dass**
im Bereich der axialen Endpositionen, also Anschläge, des Führungsteils jeweils ein elastisches Element, insbesondere O-Ring, angeordnet ist zur Aufnahme kinetischer Energie beim Auftreffen auf die Endposition.

21. Spindelmotor nach mindestens einem der vorangegangenen Ansprüche,
**dadurch** gekenntzeichnet, dass
das Führungsteil mit der Kolbenstange (14) mittels Klemmverbindung verbunden ist.

22. Spindelmotor nach mindestens einem der vorangegangenen Ansprüche,
**dadurch gekennzeichnet, dass**
das Führungsteil und die Kolbenstange (14) schraubverbunden sind.

23. Spindelmotor nach mindestens einem der vorangegangenen Ansprüche,
**dadurch** gekenntzeichnet dass
zur formschlüssigen Verbindung des Führungsteils und der Kolbenstange (14) Spannmittel vorgesehen sind, insbesondere Spannstifte.

24. Spindelmotor nach mindestens einem der vorangegangenen Ansprüche,
**dadurch gekennzeichnet, dass**
die Spannmittel in einer Bohrung des Führungsteils klemmend gehalten sind, insbesondere zur Erzeugung von Spielfreiheit bei der formschlüssigen Verbindung.

25. Spindelmotor nach mindestens einem der vorangegangenen Ansprüche,
**dadurch gekennzeichnet, dass**
die Spannmittel tangential ausgerichtet vorgesehen sind, insbesondere zum Verdrehsichem der Kolbenstange (14) gegen das Führungsteil.

26. Spindelmotor nach mindestens einem der vorangegangenen Ansprüche,
**dadurch gekennzeichnet, dass**
die Kolbenstange (14) an ihrer zur Umgebung hin vorgesehenen Oberfläche glatt ausgeführt ist.

## Claims

1. Spindle motor,
comprising an electric motor with a rotor which is connected to a threaded spindle, the thread of which is in engagement with a thread of a spindle nut (6) connected to a piston rod (14),
the spindle nut (6) with piston rod (14) being axially guided in a housing part
a guide part being connected to the spindle nut (6) and the piston rod (14) for the axial guidance,
an oil-bath lubrication being provided,
**characterised in that**
a seal is provided between the spatial region of the electric motor and the spatial region in which the spindle nut (6) is arranged,
the seal being arranged axially between a bearing of the threaded spindle and a coupling connecting the rotor shaft (2) and the threaded spindle,
in particular the coupling being an axially insertable coupling.

2. Spindle motor according to at least one of the preceding claims,
**characterised in that**
the oil bath is provided inside the spindle motor, in particular in the spindle region at the output end of the electric motor.

3. Spindle motor according to at least one of the preceding claims,
**characterised in that**
at least one high-pressure seal is used for the sealing, in particular between the spindle region and the electric motor and/or between the spindle region and the environment.

4. Spindle motor according to at least one of the preceding claims,
**characterised in that**
the seal is embodied as shaft sealing ring, which has its seat in a housing part which also has a seat for receiving the bearing of the threaded spindle,
the running surface of the shaft sealing ring being provided on the threaded spindle.

5. Spindle motor according to at least one of the preceding claims,
**characterised in that**
the threaded spindle has a shoulder for absorbing axial forces.

6. Spindle motor according to at least one of the preceding claims,
**characterised in that**
the shoulder is supported on the inner ring of the bearing provided for the threaded spindle.

7. Spindle motor according to at least one of the preceding claims,
**characterised in that**
the piston rod (14) is sealed off at the output end by a lubricant-operated sealing arrangement with respect to the output-end housing part.

8. Spindle motor according to at least one of the preceding claims,
**characterised in that**
the sealing arrangement comprises at least a scraper, an O-ring and/or a groove seal.

9. Spindle motor according to at least one of the preceding claims,
**characterised in that**
a support (8) is connected in the piston rod (14), in particular is pressed in.

10. Spindle motor according to at least one of the preceding claims,
**characterised in that**
the support (8) is embodied as a substantially cylindrical recess, an introducing slope (17) for leading in the threaded spindle being provided at its open end region.

11. Spindle motor according to at least one of the preceding claims,
**characterised in that**
the threaded spindle comprises at least one lubricant channel, in particular one composed of at least one lubricant bore (23).

12. Spindle motor according to at least one of the preceding claims,
**characterised in that**
the threaded spindle comprises at its end facing away from the motor a valve which is connected to the lubricant channel.

13. Spindle motor according to at least one of the preceding claims,
**characterised in that**
the valve is provided between an inlet opening and the lubricant channel, in particular within the threaded spindle.

14. Spindle motor according to at least one of the preceding claims,
**characterised in that**
the valve comprises at least one ball (12) pressed against an opening by a spring.

15. Spindle motor according to at least one of the preceding claims,
**characterised in that**
the lubricant channel opens, at least at its second end, in the region of the seal in such a manner that lubricant is supplied to the seal.

16. Spindle motor according to at least one of the preceding claims,
**characterised in that**
the lubricant channel opens, at least at its second end, between the seal and the bearing, in particular so that lubricant is supplied to the seal and the bearing.

17. Spindle motor according to at least one of the preceding claims,
**characterised in that**
the guide part is axially guided in the housing part via sliding blocks, in particular sliding blocks which are arranged axially movably in a groove of the housing part.

18. Spindle motor according to at least one of the preceding claims,
**characterised in that**
the threaded spindle with the rotor is also mounted in a housing part of the electric motor.

19. Spindle motor according to at least one of the preceding claims,
**characterised in that**
the rotor is connected to the threaded spindle in a manner free from play.

20. Spindle motor according to at least one of the preceding claims,
**characterised in that**
in the region of the axial end positions, i.e. stops, of the guide part there is arranged in each case an elastic element, in particular O-ring, for absorbing kinetic energy on striking the end position.

21. Spindle motor according to at least one of the preceding claims,
**characterised in that**
the guide part is connected to the piston rod (14) by means of a clamped connection.

22. Spindle motor according to at least one of the preceding claims,
**characterised in that**
the guide part and the piston rod (14) are screw-connected.

23. Spindle motor according to at least one of the preceding claims,
**characterised in that**
clamping means, in particular clamping pins, are provided for the positive connection of the guide part and the piston rod (14).

24. Spindle motor according to at least one of the preceding claims,
**characterised in that**
the clamping means are held in a clamping manner in a bore of the guide part, in particular to produce freedom from play in the positive connection.

25. Spindle motor according to at least one of the preceding claims,
**characterised in that**
the clamping means are provided tangentially oriented, in particular for rotationally securing the piston rod against the guide part.

26. Spindle motor according to at least one of the preceding claims,
**characterised in that**
the piston rod (14) has a smooth finish on its surface provided towards the environment.

## Revendications

1. Moteur à broche
comprenant un moteur électrique muni d'un rotor relié à une broche filetée dont le filetage est en prise avec le filetage d'un écrou (6) à broche, relié à une tige (14) de piston,
ledit écrou (6) à broche étant guidé axialement dans une partie de carter, avec ladite tige (14) de piston,
une partie de guidage étant reliée audit écrou (6) à broche et à ladite tige (14) de piston, pour assurer le guidage axial,
sachant qu'il est prévu une lubrification par bain d'huile,
**caractérisé par le fait**
**qu'**une garniture d'étanchement est prévue entre la région spatiale du moteur électrique et la région spatiale dans laquelle l'écrou (6) à broche est disposé,
laquelle garniture d'étanchement est interposée axialement entre un palier de la broche filetée, et un accouplement reliant l'arbre rotorique (2) et ladite broche filetée, ledit accouplement revêtant, en particulier, la forme d'un accouplement emboîtable dans le sens axial.

2. Moteur à broche selon au moins la revendication précédente,
**caractérisé par le fait que**
le bain d'huile est prévu dans l'espace interne dudit moteur à broche, notamment dans la région de la broche, côté sortie du moteur électrique.

3. Moteur à broche selon au moins l'une des revendications précédentes, **caractérisé par le fait**
**qu'**au moins une garniture d'étanchement haute pression est utilisée pour assurer l'étanchéité, en particulier entre la région de la broche et le moteur électrique, et/ou entre ladite région de la broche et l'espace environnant.

4. Moteur à broche selon au moins l'une des revendications précédentes, **caractérisé par le fait que**
la garniture d'étanchement est réalisée sous la forme d'une bague d'étanchement d'arbre disposant d'une assise dans une partie de carter, laquelle présente également une assise pour recevoir le palier de la broche filetée,
la surface de contact de ladite bague d'étanchement d'arbre étant prévue sur ladite broche filetée.

5. Moteur à broche selon au moins l'une des revendications précédentes, **caractérisé par le fait que**
la broche filetée est dotée d'un épaulement, en vue d'absorber des forces axiales.

6. Moteur à broche selon au moins l'une des revendications précédentes, **caractérisé par le fait que**
l'épaulement est en appui contre l'anneau intérieur du palier dévolu à la broche filetée.

7. Moteur à broche selon au moins l'une des revendications précédentes, **caractérisé par le fait que**
l'étanchéité de la tige (14) de piston est assurée du côté sortie, en direction de la partie de carter située côté sortie, par l'intermédiaire d'un ensemble d'étanchement fonctionnant à l'aide d'un lubrifiant.

8. Moteur à broche selon au moins l'une des revendications précédentes, **caractérisé par le fait que**
l'ensemble d'étanchement comprend au moins un racleur, une bague torique et/ou une garniture d'étanchement à gorges.

9. Moteur à broche selon au moins l'une des revendications précédentes, **caractérisé par le fait**
**qu'**un moyen d'appui (8) est relié intérieurement à la tige (14) de piston, notamment par emmanchement à force.

10. Moteur à broche selon au moins l'une des revendications précédentes, **caractérisé par le fait que**
le moyen d'appui (8) est réalisé sous la forme d'un évidement essentiellement cylindrique, dans la région extrême ouverte duquel un biseau d'introduction (17) est prévu pour l'enfilement de la broche filetée.

11. Moteur à broche selon au moins l'une des revendications précédentes, **caractérisé par le fait que**
la broche filetée comporte au moins un canal à lubrifiant se présentant au moins, en particulier, comme un alésage (23) à lubrifiant.

12. Moteur à broche selon au moins l'une des revendications précédentes, **caractérisé par le fait que**
la broche filetée comporte, à son extrémité tournée à l'opposé du moteur, une soupape reliée au canal à lubrifiant.

13. Moteur à broche selon au moins l'une des revendications précédentes, **caractérisé par le fait que**
la soupape est prévue entre un orifice d'admission et le canal à lubrifiant, notamment à l'intérieur de la broche filetée.

14. Moteur à broche selon au moins l'une des revendications précédentes, **caractérisé par le fait que**
la soupape comprend au moins une bille (12) poussée contre un orifice, sous l'action d'un ressort.

15. Moteur à broche selon au moins l'une des revendications précédentes, **caractérisé par le fait que**
le canal à lubrifiant débouche dans la région de la garniture d'étanchement, au moins par sa seconde extrémité, de telle sorte que du lubrifiant soit délivré à ladite garniture d'étanchement.

16. Moteur à broche selon au moins l'une des revendications précédentes, **caractérisé par le fait que**
le canal à lubrifiant débouche entre la garniture d'étanchement et le palier, au moins par sa seconde extrémité, en particulier de telle sorte que du lubrifiant soit délivré à ladite garniture d'étanchement et audit palier.

17. Moteur à broche selon au moins l'une des revendications précédentes, **caractérisé par le fait que**
la partie de guidage est guidée axialement dans la partie de carter par l'intermédiaire de coulisseaux, notamment des coulisseaux disposés, avec mobilité axiale, dans une rainure de ladite partie de carter.

18. Moteur à broche selon au moins l'une des revendications précédentes, **caractérisé par le fait que**
la broche filetée est montée, également avec le rotor, dans une partie de carter du moteur électrique.

19. Moteur à broche selon au moins l'une des revendications précédentes, **caractérisé par le fait que**
le rotor est relié à la broche filetée avec absence de jeu.

20. Moteur à broche selon au moins l'une des revendications précédentes, **caractérisé par le fait**
**qu'**un élément élastique respectif, en particulier une bague torique, est disposé dans la région des emplacements extrêmes axiaux, c'est-à-dire de butées, en vue d'une absorption d'énergie cinétique lors de la venue en applique contre l'emplacement extrême.

21. Moteur à broche selon au moins l'une des revendications précédentes, **caractérisé par le fait que**
la partie de guidage est reliée à la tige (14) de piston au moyen d'une liaison par coincement.

22. Moteur à broche selon au moins l'une des revendications précédentes, **caractérisé par le fait que**
la partie de guidage et la tige (14) de piston sont solidarisées par vissage.

23. Moteur à broche selon au moins l'une des revendications précédentes, **caractérisé par le fait que**
des moyens de serrage, en particulier des goupilles de serrage, sont prévus pour assurer la liaison, par complémentarité de formes, entre la partie de guidage et la tige (14) de piston.

24. Moteur à broche selon au moins l'une des revendications précédentes, **caractérisé par le fait que**
les moyens de serrage sont retenus dans un alésage de la partie de guidage, avec effet de coincement, notamment pour procurer une absence de jeu au stade de la liaison par complémentarité de formes.

25. Moteur à broche selon au moins l'une des revendications précédentes, **caractérisé par le fait que**
les moyens de serrage sont prévus avec orientation tangentielle, notamment pour provoquer le verrouillage rotatif de la tige (14) de piston contre la partie de guidage.

26. Moteur à broche selon au moins l'une des revendications précédentes, **caractérisé par le fait que**
la tige (14) de piston est de réalisation lisse sur sa surface pointant vers l'espace environnant.
